# EUROPÄISCHE PATENTANMELDUNG

(11) **EP 1 197 151 A2**
(43) Veröffentlichungstag der Anmeldung: **17.04.2002**
(21) Anmeldenummer: 01730003.9
(22) Anmeldetag: 09.10.2001
(51) Int. Cl.: A23B 7/04, A23B 7/055, A23B 7/01, A23B 7/015, A23B 9/04, A23B 9/06, A23B 9/10, A23B 7/06

(54) **Verfahren zur Behandlung von Kräutern mittels Mikrowelle**

(30) Priorität: 12.10.2000 EP 00122109
(71) Anmelder: FRoSTA Aktiengesellschaft, 27572 Bremerhaven (DE)
(72) Erfinder: Buschmann, Urban, 31535 Neustadt (DE)
(74) Vertreter: Fleck, Thomas, Dr. Dipl.-Chem.

(57) **Zusammenfassung**

Die Erfindung betrifft ein Verfahren zur Herstellung tiefgefrorener Kräuter. Grundsätzlich sind die Hersteller von Nahrungsmitteln und dgl. immer bestrebt, Verbesserungen ihrer Produkte zu erreichen. Bei Kräuter ist es immer wünschenswert, ihre Elastizität und Aroma zu erhalten, ihre Haltbarkeit zu verlängern und gleichzeitig die mikrobiologische Belastung der Kräuter deutlich zu reduzieren. Dieses erreicht das erfindungsgemäße Verfahren dadurch, daß die Kräuter in ein leicht kompaktes Gebilde mit einem speziellen Gewicht von 0,01-0,5 g/cm³ gebracht werden und in der Mikrowelle ggf. unter gleichzeitiger Kühlung und Sauerstoffausschluß behandelt werden, und zwar in einem Temperaturbereich von - 20 bis < +60°C. Je nach Dauer der Mikrowellenbehandlung der Kräuter werden sie entkeimt oder schließlich enzymdeaktiviert. Bei dem letztgenannten Vorgang kann die Temperatur auf bis zu +85°C ansteigen. (Fig. 1)

## Beschreibung

Die Erfindung betrifft ein Verfahren zur Behandlung von Kräutern mittels Mikrowelle.

Verfahren zur Kräuterverarbeitung sind in unterschiedlichen Variationen im Stand der Technik bekannt. Das Wesentliche in diesen Verfahren ist, dass Kräuter bisher nicht blanchiert werden. Nachteilig dabei ist, dass die mit Wasser gewaschenen Kräuter sehr hohe Keimzahlen aufweisen. Hierdurch stellen diese Kräuter ein potentielles Gesundheitsrisiko dar. Ferner ist die Haltbarkeit der bisherigen, tiefgefrorenen Kräutern sehr eingeschränkt. Der wesentliche Grund für die kurze Haltbarkeit ist der relativ hoher Eiweißgehalt von Kräutern, z.B. Petersilie besteht zu ca. 4,4% aus Eiweiß. Bis zu 80% dieser Eiweiße in Kräutern liegen als Enzyme vor. Das heißt Kräuter besitzen eine große Affinität nach der Ernte eigene Stoffe (und Aromen) zu veratmen bzw. abzubauen. Dieser Abbau findet bekanntlich auch unter Tiefkälte statt. Dieser Verlust an Qualität muss bisher beim Vermarkten von Kräutern in Kauf genommen werden.

Der bekannte Stand der industriellen Kräuterverarbeitung weist folgende Verfahrensstufen auf:
Waschen, Zerkleinern, Stiele abtrennen und verwerfen, Entwässern, Gefrieren als free flow, Verpacken, gewöhnlich in einer Karton-, Kunststoff-, Folienverpackung.

Die einzelnen Stufen können in ihrer Reihenfolge variiert werden.

In der industriellen und in der häuslichen Anwendung von Tiefkühl-Kräutern werden sie fast ausschließlich roh eingesetzt. Es ist aber ein Abbrühen der Kräuter mit heißem Wasser zwecks Inaktivierung von Enzymen bekannt. Dabei werden Nachteile wie Aromaauslaugen und Farbverlust in Kauf genommen.

Um eine bessere Streufähigkeit, kein Verklumpen und besseres Aroma von Kräutern (kein Verklumpen) zu erreichen, gibt es auch ein Verfahren zum Überziehen der zerkleinerten Kräuter mit speziellen Fetten. Auf dem Markt sind ferner speziell verpackte Produkte (dichte Kunststoffverpackung) vorhanden, die das Aroma während der Lagerung schützen sollen.

Auch ist es bekannt, die enzymatische Aktivität durch Vermengen mit einer Gewürzzubereitung abzusenken (Wasserentzug) und dadurch eine längere Haltbarkeit zu erreichen.

In der US-A-5,397,584 werden Kräuter mit einem osmotischen Mittel (10-70 % Glucose, Fructose) bei einer Temperatur von 180°F bis 225 °F für 20 Sek. behandelt. Durch diese Behandlung kommt es zum Entwässern der Kräuter, so dass sie eine bessere Farbe und kein Verklumpen während der Lagerung aufweisen sollen.

Nach der EP-A-0 052 574 werden Kräuter mit flüssigem Stickstoff gekühlt und zu einem Granulat zerkleinert. Das Granulat wird dann zu Formkörpern gepresst. Dadurch wird weniger Lagervolumen erzielt und es soll eine bessere Aromaerhaltung erzielt werden.

Nach der EP-B-498 972 wird Gemüse (z. B. Karotten) mittels Mikrowelle in gesättigten Dampf blanchiert bzw teilgegart. Dadurch wird soll ein besseres Aroma bei Gemüsearten erreicht, die gewöhnlich bereits in heißem Wasser blanchiert werden.

In der US-A-3,734,751 wird Mikrowelle zur Erhöhung der Trokkenmasse von Blattgemüse (z.B. Spinat) eingesetzt.

Schließlich beschreibt die US-A-4,510,163 ein Verfahren zum Herstellen eines zerteilten oder geschnittenen, gefrorenen Lebensmittelproduktes, das einer Mikrowellenbehandlung unterzogen wird, um ihm 15-25 gew% Wasser zu entziehen . Die Mikrowellenbehandlung im Bereich einer Frequenz von 800-3000 MHz mit einer Leistung von 1-100 kW wird 5-15 Minuten durchgeführt und das Lebensmittel erreicht hierdurch eine Temperatur von mindestens 75°C, insbesondere 90-100°C.

Bei dieser Ausgangssituation des Standes der Technik liegt der Erfindung die Aufgabe zugrunde, das eingangs genannte Verfahren derart zu verbessern, daß es eine Erhaltung des Aromas im Endprodukt bewirkt, die Haltbarkeit verlängert und mikrobiologische Belastung von Kräutern signifikant herabsetzt.

Dieses wird erfindungsgemäß durch das Verfahren nach Anspruch 1 erreicht, das die dünnblättrigen Kräuter nach dem Waschen in eine leicht verdichtete Form mit einem spezifischen Gewicht von 0,01-0,5 g/cm³ bringt und in einer Mikrowelle behandelt. Gerade diese Verdichtung oder leichte Kompaktierung ermöglicht die erfindungsgemäße Behandlung der Kräuter im gewünschten Zeitraum, was mit vereinzelten Kräuterblättern nicht möglich ist. Erfindungsgemäß wird für die Entkeimung in einem Bereich von -20° bis <+60°C gearbeitet, wobei ggf. zur vollständigen Enzymdeaktivierung die Temperatur bis zu etwa 85°C ansteigen kann.

Die natürlichen Blätter mit teilweise anhängenden Stielteilen von geernteten Kräutern besitzen eine dreidimensionale, unregelmäßige und zum Teil kräuselnde Form. Ferner besitzen diese Blätter stark elastische Rückstellkräfte, d.h. sie nehmen im Raum ein Volumen ein, das sich durch eine sehr geringe Dichte (0,01-0,5 g/cm³) auszeichnet. Schüttet man die Kräuter in einen Behälter, so wird das Volumen des Behälters nur zu einem geringen Teil von der Kräutermasse eingenommen. Es bestehen zwischen den Blättern zum Teil große "Luftlöcher".

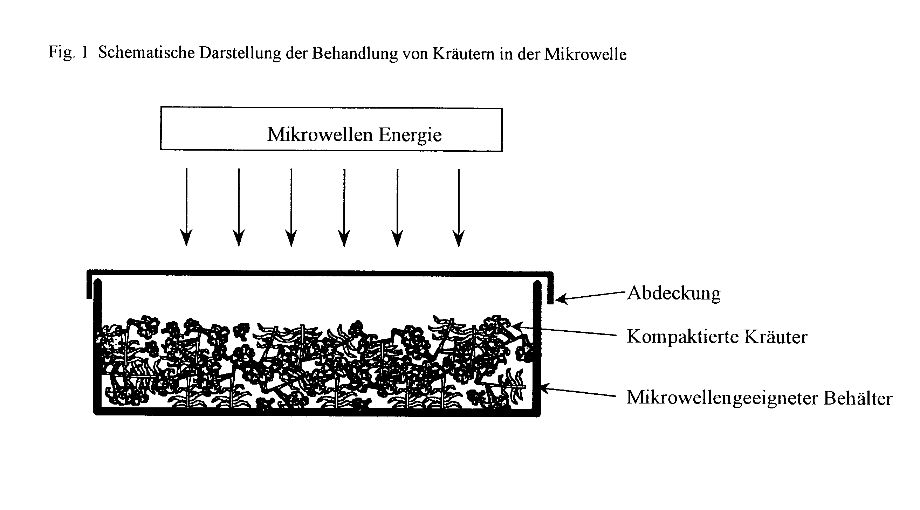

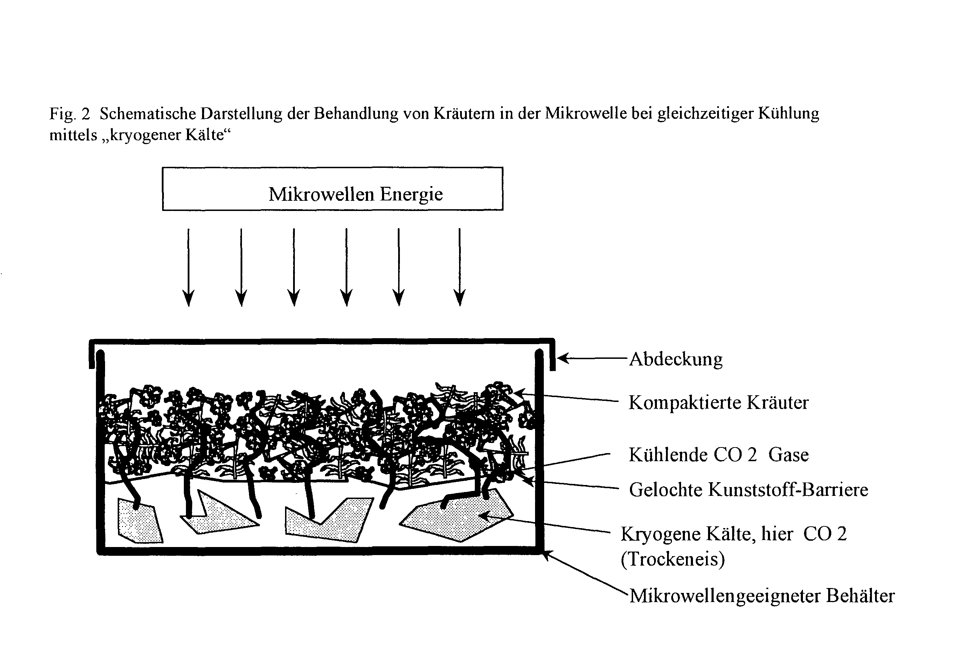

Durch ein Zusammendrücken von geschütteten Kräutern auf ca. ½ des Volumens mit einer folgenden Entspannung (Wegfall der Drückkräfte) ergibt sich ein Gebilde, das wesentlich weniger "Luftlöcher" (Fig. 1 und 2) enthält und die s.g. "leicht kompakte Form" ergibt.

In diese Form gebrachte Kräuter lassen sich bevorzugt in der Mikrowelle gleichmäßig behandeln.

Je nach Dauer der Mikrowellen-Behandlung werden verschiedene Effekte erzielt. In der Mikrowelle werden als erstes im Verlauf von 10-20 Sek. Mikroorganismen der Kräuter abgetötet, wobei die Kräuterpflanze jedoch weitgehendst intakt bleibt. Auf diese Weise lassen sich Kräuter wesentlich entkeimen. Wird die Mikrowellen-Behandlung vorteilhafterweise länger, etwa bis zu 60 Sek. durchgeführt, werden Enzyme der Kräuterpflanze im wesentlichen inaktiviert. Behandlungszeiten können jedoch ja nach Menge der Kräuter auch bis zu 30 Minuten andauern. Auf diese Weise lassen sich Kräuter blanchieren und ihr natürliches Aroma erhalten. Die eingesetzte Frequenz kann in einem breiten Bereich (0,3-24250 MHz) gewählt werden, ebenso wie die Leistung (0,1-1000 kW).

Unter dem Begriff "Entkeimung" versteht man die Erreichung einer bestimmten Abnahme an Mikroorganismen. Diese Reduktion der Anzahl der vegetativen Mikroorganismen ist insbesondere wichtig, weil dadurch die Wahrscheinlichkeit, daß krankmachende Keime vorhanden sind, sehr stark minimiert wird. Ein vollständiges Abtöten der Mikroorganismen ist hier nicht das Ziel, da dieses mit Pasteurisieren (Abtöten fast aller vegetativen Keime) verbunden wäre. Dies ist aber mit negativen Veränderungen des pflanzlichen Gewebes verbunden.

Übliche Werte, die beim Entkeimen erreicht werden sollten, sind:

| | |
|---|---|
| Enterobacteriaceae | < 100/g |
| Eschrichia Coli | < 10/g |
| Hefen | < 100/g |
| Schimmelpilze | < 100/g |
| Gesamtkeimzahl | < 10 000 bis < 100 000 |

Diese Werte sind nur als Richtwerte zu verstehen. Die Zahlen können um diese Werte schwanken.

Das erfindungsgemäße Mikrowellenverfahren kann somit die eingangs geschilderten Nachteile des Blanchierens im Wasserbad oder unter tröpfelnden heißen Wasser sicher vermeiden.

Die Vorteile des erfindungsgemäßen Verfahrens lassen sich wie folgt zusammenfassen:
a.) Einsatz eines physikalischen Verfahrens eines wechselnden elektromagnetischen Feldes zur Entkeimung von Kräutern und eines deutlich verringerten mikrobiologischen Gesundheitsrisikos der Verbraucher.
b.) Blanchieren der Kräuter mittels des wechselnden elektromagnetischen Feldes zwecks Inaktivierung der Enzyme der Pflanze und deutlicher Verlängerung von Haltbarkeit.

Während der Mikrowellen-Behandlung werden die Kräuter vorteilhafterweise gleichzeitig mit kryogener Kälte (z.B. N₂, CO₂) oder kühler Luft gekühlt und so vor zu großer Erwärmung durch die Mikrowelle geschützt, d.h. die eingebrachte Energie der Mikrowelle kann im gewünschten Ausmaß kompensiert werden.

Weitere Vorteile und Merkmale gehen aus den Unteransprüchen hervor, die auch gemeinsam mit dem Hauptanspruch von erfinderischer Bedeutung sein können.

Im folgenden werden verschiedene Ausführungsbeispiele anhand der Zeichnung zum besseren Verständnis der Erfindung näher erläutert, auf die die Erfindung jedoch nicht beschränkt ist.

Es zeigt:
- Fig. 1: eine schematische Ansicht einer Mikrowellenbehandlung, die einen wesentlichen Teil des erfindungsgemäßen Verfahrens darstellt, bei der die zu behandelnden Kräuter in einem Behältnis aufgenommen sind;
- Fig. 2: eine schematische Ansicht der Mikrowellenbehandlung gemäß Fig. 1, wobei gleichzeitig gekühlt wird;
- Fig. 3a: eine graphische Darstellung der Abnahme der Gesamtkeimzahl über die Zeit der Behandlung in der Mikrowelle;
- Fig. 3b: eine graphische Darstellung des Zusammenhanges zwischen der Temperatur und der Zeit der Behandlung in der Mikrowelle;
- Fig. 4: eine graphische Darstellung der Veränderung des Petersilienaromas in einem Lagerungstest; und
- Fig. 5: eine graphische Darstellung des Zusammenhanges zwischen der Temperatur in der verdichteten Schicht und der Abnahme der Gesamtkeimzahl.

Die Kräuter werden blanchiert, um die enzymatische Aktivität zu stoppen und eine wesentliche längere Haltbarkeit während der Tiefkühllagerung zu erreichen.

Während der Mikrowellenbehandlung können die Kräuter zur gleichen Zeit kryogen (z.B. flüssiger N₂ oder CO₂) gekühlt werden. So wirkt die Mikrowellenenergie nur auf das Innere der Pflanze (Enzymzerstörung) und das Produkt wird gleichzeitig von außen gekühlt. Durch die Zugabe von kryogenen Gasen wird Sauerstoff zum größten Teil oder vollständig verdrängt, wodurch unerwünschte Oxidationen von Inhaltsstoffen vermieden werden (vgl. Fig. 2).

### Beispiel 1.

Gewaschene und abgetropfte Petersilie wird in einer leicht verdichteten Schicht (0,08 g/cm³) von 3 cm Dicke und in ein mikrowellenfähiges Behältnis von 38 cm Länge, 25 cm Breite gebracht und von oben abgedeckt. Andere Schichtdicken sind denkbar. Diese Form wird als ein Endlosband einem Mikrowellenfeld von ca 800 W bei 8 kW der Gesamtanlage zwecks Herabsetzung der mikrobiologischen Belastung ausgesetzt. Andere Frequenzen und Leistung der Mikrowelle sind ebenfalls für den Fachmann denkbar. Folgende Werte wurden erreicht (Auszug) :

| Verweilzeit in der Mikrowelle | Temperatur der Petersilie | Gesamt Keimzahl | Enterobacteriaceae |
|---|---|---|---|
| unbehandelt | 15 °C | 20.000.000 | 35.000 |
| 15 sek | 27 °C | 4.200.000 | 3.900 |
| 20 sek | 34 °C | 2.300.000 | 2.800 |
| 25 sek | 46 °C | 1.190.000 | 2.300 |
| 30 sek | 56 °C | 100.000 | <100 |

Die mikrowellenbehandelten Proben wiesen Eigenschaften auf, die weitgehend vergleichbar zu den unbehandelten Proben waren.

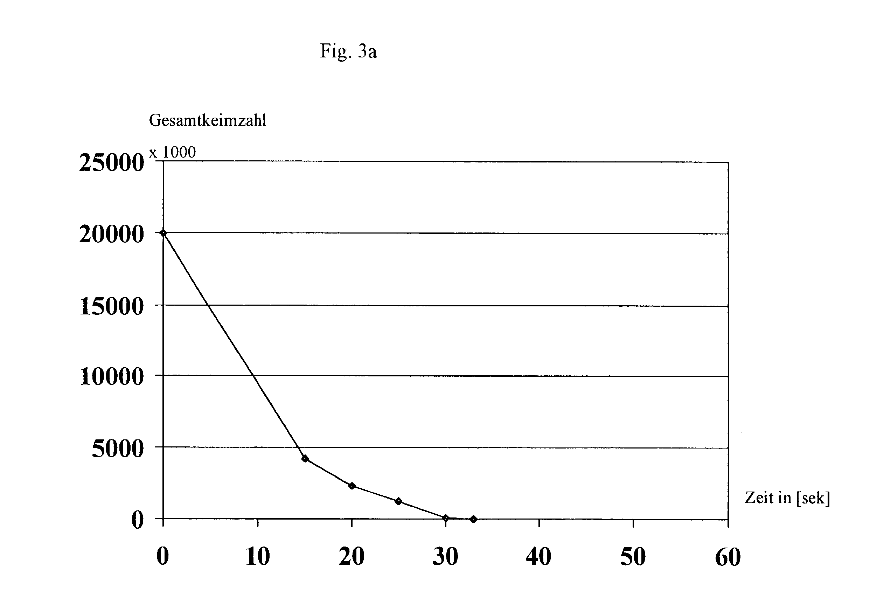

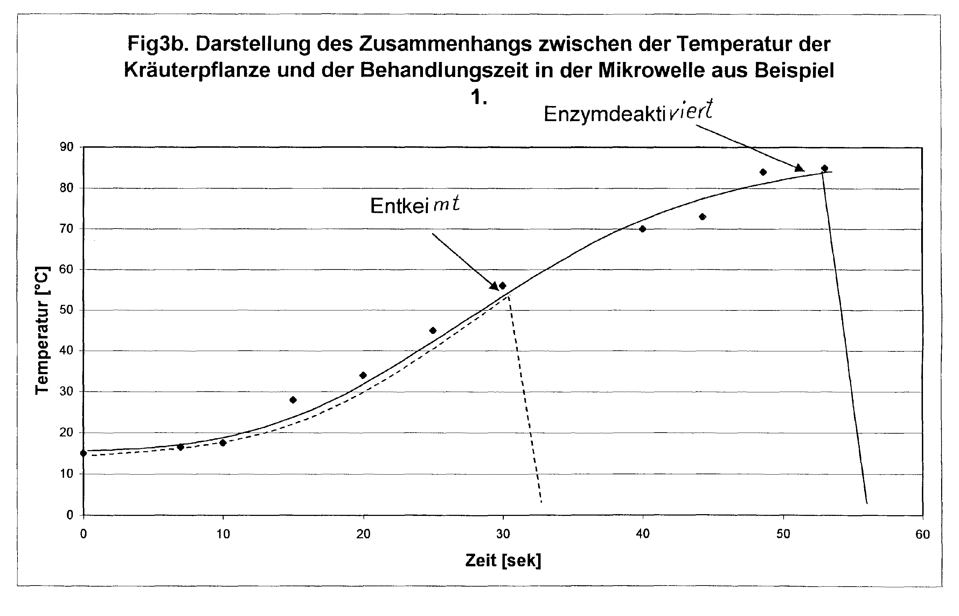

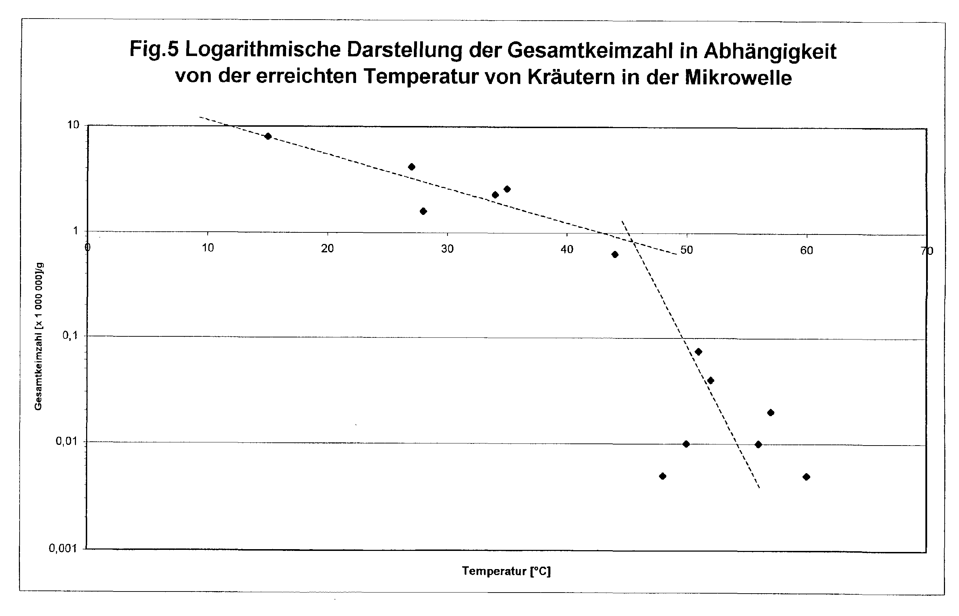

Während und nach der Mikrowellenbehandlung wurden die Proben direkt mit flüssigem Stickstoff auf Raumtemperatur abgekühlt und anschließend eingefroren. In Figuren 3a und 3b stellt die Linie die Entkeimung bzw. die Temperatur gegenüber der Einwirkzeit der Mikrowelle dar, während in Fig. 5 dieselbe gegen die Temperatur aufgetragen ist. Signifikante Veränderungen zeigen sich hier im Bereich von 40-59°C.

Die Fig. 5 zeigt den Kern der Erfindung. Die Behandlung der Kräuter in der Mikrowelle im Temperaturbereich +15°C bis 45°C (=30°C Differenz) bringt bereits eine Reduktion von der Gesamtkeimzahl um über 1 Zehnerpotenz. Eine weitere Behandlung in der Mikrowelle von ca. 45°C bis 55°C (= 10°C Differenz) bewirkt eine Reduktion von 2 Zehnerpotenzen.

Der zuletzt genannte Bereich um 48 - 52°C ist bei der Entkeimung in der Mikrowelle von entscheidender Bedeutung, weil hier die Wirkung auf die Mikroorganismen sehr groß ist. Auf der anderen Seite bleibt die Pflanze weitgehend intakt.

Interessant ist auch, daß ein weiteres Erwärmen über 60°C hinaus keine wesentlichen, weiteren Reduktionen der Mikroorganismen bringt. Vielmehr wird nur die Pflanze thermisch beansprucht, wobei ein Teil der typischen Eigenschaften von frischer Petersilie (Elastizität, bitterer und säuerlicher Geschmackskomponente) verloren gehen.

Wird die Mikrowellenbehandlung zeitlich verlängert und die Temperatur gehalten, so werden Enzyme weiter deaktiviert.

Die Ermittlung der Temperatur erfolgte mittels eines Einstechtermometers, wobei die Spitze des Gerätes in die mikrowellenbehandelte Kräuterschicht gesteckt wurde.

Die mikrobiologischen Bestimmungen der Keimzahlen sind nach den derzeit üblichen Methoden durchgeführt. Die weitgehende Intaktheit der Pflanzenzellen ist erkennbar an der Erhaltung der Sprungkraft der Pflanze. Dieses demonstriert sich, indem elastische Eigenschaften (Fehlen am Zusammenfallen der Stiele und Blätter) der Pflanze im wesentlichen erhalten bleiben.

Die Prüfung der Enzymaktivitäten erfolgte mittels Testplättchen auf Peroxidaseaktivität der Fa. Beythien-Diemair, wobei das Petersiliengewebe mittels einer Messerspitze zerrieben wurde.

### Beispiel 2.

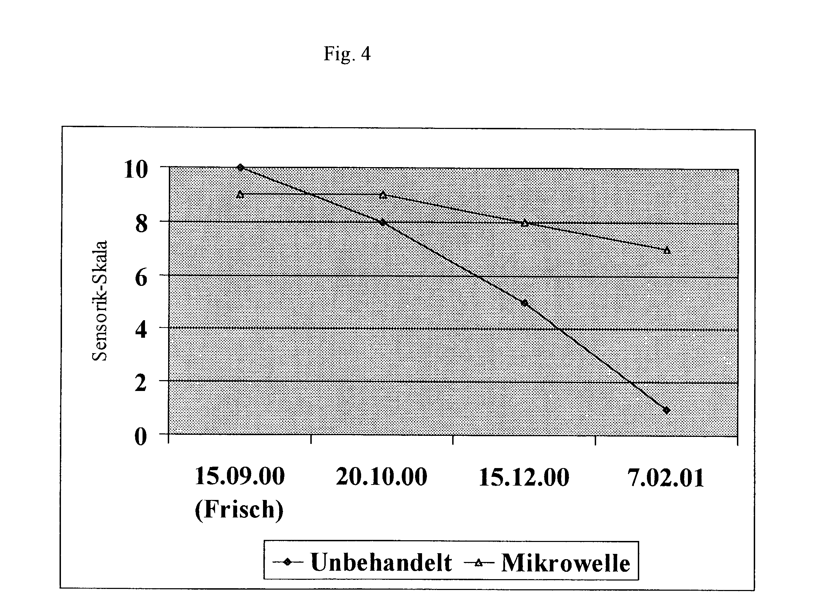

Petersilie (0,05 g/cm³) wird in einer Schichtdicke von 3 cm und einem Durchmesser von 15 cm leicht verdichtet ausgebreitet in einem abgedeckten Behältnis gebracht und einem Mikrowellenfeld (ca 800 W) ausgesetzt (siehe Fig.1). Das Blanchieren (Denaturierung der Enzymproteine durch Hitzeeinwirkung) wird nach einer Behandlungszeit von ca. 20 sek. erreicht. Die Proben wurden erst nach der Mikrowellenbehandlung mittels kalter Luft auf Raumtemperatur abgekühlt und anschließend eingefroren. Weiter wurden die Proben in einem speziellen Tiefkühllagertest (schwankende Temperatur zwischen -20°C und -12°C, drei mal pro Tag) auf die Erhaltung von Petersilienaroma untersucht. Die mikrowellenbehandelten Kräuter erhalten wesentlich besser das Aroma als vergleichbare, unbehandelte Proben (siehe Fig.4). Die Prüfung der Enzymaktivitäten erfolgte mittels Testplättchen auf Peroxidaseaktivität der Fa. Beythien-Diemair, wobei das Petersiliengewebe mittels einer Messerspitze zerrieben wurde.

### Beispiel 3.

Auf dem Boden eines mikrowellengeeigneten Behältnisses wurde Trockeneisgranulat in einer Schichtdicke von 1 cm ausgebreitet. Darauf wurde eine perforierte (gelochte) Platte gelegt. Auf dieser Platte wurde Petersilie (0,06 g/cm³) in einer Schichtdicke von 3 cm und einem Durchmesser von 15 cm leicht verdichtet ausgebreitet gebracht und einem Mikrowellenfeld (ca 800 W) ausgesetzt (siehe Fig.1). Das Blanchieren (Denaturierung der Enzymproteine durch Hitzeeinwirkung) wurde nach einer Behandlungszeit von ca. 25 sek. erreicht. Andere Behandlungszeiten sind jedoch realisierbar. Die Proben wurden nach der Mikrowellenbehandlung mit dem Trockeneisgranulat vermengt, dadurch auf Raumtemperatur abgekühlt und anschließend eingefroren. Die Prüfung der Enzymaktivitäten erfolgte mittels Teststplättchen auf Peroxidaseaktivität der Fa. Beythien-Diemair, wobei das Petersiliengewebe mittels einer Messerspitze zerrieben wurde.

Andererseits ist es auch möglich, zu Beginn angefrorene Kräuter einzusetzen.

Generell ist es jedoch wichtig festzustellen, daß das Entkeimen auch ohne Kühlung während der Erwärmung in der Mikrowelle funktioniert. Von Vorteil ist aber ein direktes Abkühlen auf unterhalb 40°C nach dieser Behandlung (innerhalb 2-30 sek). Von besonderer Bedeutung beim Entkeimen ist die schnelle Zunahme der Abtötung der Mikroorganismen zwischen 48 und 52°C (siehe Fig. 5).

Beim Blanchieren (Enzymdeaktivierung) ist die Kühlung während der Erwärmung jedoch wichtiger.

### Beispiel 4.

Gewaschene und abgetropfte Kresse (0,09 g/cm³) wurde auf ein Endlosband mit einer Breite von ca. 27 cm und einer Schichtdicke von ca. 3 cm ausgebreitet, leicht zusammengedrückt und sich entspannen lassen. Das Produkt wurde auf dem Band durch ein Mikrowellenfeld von 800 Watt (Gesamtanlage: 6,3 KW) geführt und dabei von den Seiten und von oben abgedeckt. Bei einer Durchlauf zeit von 3 min wurde eine Temperatur von 52 °C gemessen und folgende mikrobiologische Werte erreicht:
- Gesamtkeimzahl: 40 000
- Enterobacterlaceae: < 100
- E.Coli: < 10
- Hefen: < 100
- Schimmelpilze: < 100

Die Ermittlung der Temperatur erfolgte mittels eines Eintechthermometers, wobei die Spitze des Gerätes in die Kräuterschicht gestochen wurde.

Die mikrobiologische Bestimmung der Keimzahlen sind nach der derzeit üblichen Methoden durchgeführt.

### Beispiel 5.

Gewaschener und abgetropfter Borretsch wurde auf 0,2 g/cm³ verdichtet und in einer Schicht von 3 cm in ein mikrowellengeeignetes Behältnis (Breite 25 cm, Länge 38 cm) gegeben und abgedeckt. Andere Schichtdicken sind denkbar. Diese Form wurde auf ein Endlosband gegeben und einem Mikrowellenfeld von ca. 800 W bei gesamt 8 KW ausgesetzt und unmittelbar danach mittels kalter Luft abgekühlt. Nach einer Mikrowellen-behandlung von 43 sek. zeigte die Reaktion auf Peroxidase einen negativen Wert.

Die Prüfung der Enzymaktivität erfolgt mittels Testplättchen der Fa. Beythien-diemair, wobei das untersuchte Gewebe zerrieben wurde.

## Patentansprüche

1. Verfahren zur Herstellung tiefgefrorener Kräuter, unter Erhaltung ihrer natürlichen Elastizität und/oder Aromas, bei dem die vom Feld geerntete Rohware gewaschen und anschließend in einer kompakten Schicht mit einem spezifischen Gewicht von 0,01 bis 0,5 g/cm³ angeordnet wird und dann in einem elektromagnetischen Wechselfeld mit einer Frequenz im Bereich von 0,3 - 24.250 MHz in einem Temperaturbereich von -20 bis < +60°C bis zur Erreichung einer wesentlichen Entkeimung oder bei fortschreitender Behandlung bis zur Inaktivierung der Enzyme behandelt wird.

2. Verfahren nach Anspruch 1, **dadurch gekennzeichnet, daß** die Schichtdicke der Kräuter zwischen 0,1 cm und 50 cm liegt.

3. Verfahren nach Anspruch 1, **dadurch gekennzeichnet, daß** die Kräuter aufeinander geschüttet und innerhalb von 1-5 Sek. auf 50% des Volumens komprimiert werden und dann sich wieder entspannen.

4. Verfahren nach Anspruch 1, **dadurch gekennzeichnet, daß** die Behandlung mit dem elektromagnetischen Wechselfeld in Abhängigkeit von der Stärke desselben und der Schichtdicke in 10 Sek. bis 30 Min. durchgeführt wird.

5. Verfahren nach Anspruch 1, **dadurch gekennzeichnet, daß** die Behandlung unter Sauerstoffausschluß erfolgt.

6. Verfahren nach Anspruch 1, **dadurch gekennzeichnet, daß** die Behandlung der Kräuter im elektromagnetischen Wechselfeld chargenweise oder im Durchlaufverfahren kontinuierlich durchgeführt wird.

7. Verfahren nach Anspruch 1, **dadurch gekennzeichnet, daß** die Frequenz im Bereich von 800-3000 MHz liegt.

8. Verfahren nach Anspruch 1, **dadurch gekennzeichnet, daß** die Temperatur der Kräuter während der Entkeimung im elektromagnetischen Wechselfeld zwischen 48 und 53°C gehalten wird.

9. Verfahren nach Anspruch 1, **dadurch gekennzeichnet, daß** die durch das elektrische Wechselfeld entstandene Wärme gleichzeitig durch Einsatz von kryogener Kälte, wie N₂ oder CO₂, oder kalter Luft im gewünschten Ausmaß kompensiert wird, und wobei die Kräuter vor oder nach der Behandlung tiefgefroren werden.

10. Kräuter, hergestellt nach dem Verfahren gemäß einem oder mehreren der Ansprüche 1 bis 9, **dadurch gekennzeichnet, daß** sie frische Blätter, Blüten, Sprossen oder Teile von Pflanzen, die wegen ihres Gehaltes an natürlichen Inhaltsstoffen als geschmack- und/oder geruchsgebenden Zutaten zu Lebensmitteln bestimmt sind, umfassen insbesondere Basilikum, Boretsch, Dill, Kerbel, Kresse, Petersilie, Pimpinelle, Sauerampfer, Sellerieblatt, Liebstökkel, Estragon, Schnittlauch, Koriander, Majoran, Beifuß, Melisse, Origano, Pfefferminze, Rosmarin, Salbei, Thymian.
